# EUROPÄISCHE PATENTANMELDUNG

(11) **EP 3 360 715 A1**
(43) Veröffentlichungstag der Anmeldung: **15.08.2018**
(21) Anmeldenummer: 18153626.9
(22) Anmeldetag: 26.01.2018
(51) Int. Cl.: B60K 15/07, F17C 13/00, B60K 15/03, B60K 15/063

(54) **SCHUTZGEHÄUSE FÜR EINEN TREIBSTOFFBEHÄLTER SOWIE INSPEKTIONSVERFAHREN**

(30) Priorität: 10.02.2017 DE 102017202120
(71) Anmelder: VOLKSWAGEN AKTIENGESELLSCHAFT, 38440 Wolfsburg (DE)
(72) Erfinder: Goerke, Christian, 38376 Süpplingenburg (DE); Leifheit, Matthias, 38154 Königslutter (DE); Kahlich, Michael, 38518 Gifhorn (DE); Allwardt, Christian, 38446 Wolfsburg (DE)

(57) **Zusammenfassung**

Die Erfindung betrifft ein Schutzgehäuse (10) für zumindest einen Treibstoffbehälter (1) eines Fahrzeuges (2), mit einem Abdeckkörper (11), der dazu ausgebildet ist den Treibstoffbehälter (1) zumindest teilweise vor Umwelteinflüssen zu schützen. Ferner betrifft die Erfindung ein Inspektionsverfahren (100) zur Überprüfung zumindest eines Treibstoffbehälters (1) an einem Fahrzeug.

## Beschreibung

Die Erfindung betrifft ein Schutzgehäuse für zumindest einen Treibstoffbehälter eines Fahrzeugs gemäß dem Oberbegriff des unabhängigen Anspruchs 1 sowie ein Inspektionsverfahren zur Überprüfung zumindest eines Treibstoffbehälters.

Es ist bekannt, dass Treibstoffbehälter bei Fahrzeugen eines besonderen Schutzes gegenüber Umweltbedingungen bedürfen. So sind die darin gelagerten Treibstoffe häufig leicht entflammbar oder gar explosiv, sodass ein Austritt der Treibstoffe verhindert werden soll. Dazu weisen die Treibstoffbehälter selbst häufig besondere Sicherheitsmaßnahmen auf. Um jedoch die Treibstoffbehälter zusätzlich vor äußeren Umwelteinflüssen zu schützen, sind meist zusätzliche Schutzgehäuse vorgesehen, welche den Treibstoffbehälter gegenüber Schmutz und Feuchtigkeit abschirmen. Dies ist beispielsweise auch bei Erdgasfahrzeugen interessant, da deren Treibstoffbehälter oft in Achsnähe bzw. im Bereich des Unterbodens des Fahrzeugs montiert werden.

Problematisch bei derartigen, aus dem Stand der Technik bekannten Schutzgehäusen, ist, dass diese zumindest teilweise oder vollständig demontiert werden müssen, um eine Überprüfung der Treibstoffbehälter vorzusehen. Bei normalen Routineüberprüfungen, wie beispielsweise der gesetzlich vorgeschriebenen Hauptuntersuchung, ist jedoch im Normalfall nicht vorgesehen, größere Teile des Fahrzeugs zu demontieren, sodass eine Inspektion des äußerlichen Zustands der Treibstoffbehälter, z. B. im Hinblick auf Korrosion, nicht oder nur unter erschwerten Bedingungen möglich ist.

Es ist somit Aufgabe der vorliegenden Erfindung, voranstehende, aus dem Stand der Technik bekannte Nachteile zumindest teilweise zu beheben. Insbesondere ist es die Aufgabe der vorliegenden Erfindung, eine Untersuchung eines Treibstoffbehälters eines Fahrzeugs zu vereinfachen.

Die voranstehende Aufgabe wird gelöst durch ein Schutzgehäuse mit den Merkmalen des Anspruchs 1 und ein Inspektionsverfahren mit den Merkmalen des Anspruchs 10.

Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Schutzgehäuse beschrieben worden sind, selbstverständlich auch im Zusammenhang mit dem erfindungsgemäßen Inspektionsverfahren und jeweils umgekehrt, sodass bezüglich der Offenbarung zu den einzelnen Erfindungsaspekten stets wechselseitig Bezug genommen wird bzw. werden kann.

Erfindungsgemäß weist das Schutzgehäuse für zumindest einen Treibstoffbehälter eines Fahrzeugs einen Abdeckkörper auf, der dazu ausgebildet ist, den Treibstoffbehälter zumindest teilweise, insbesondere bereichsweise, vor Umwelteinflüssen zu schützen. Dabei ist der Abdeckkörper in einen Verschlusszustand und einen Freigabezustand bringbar, wobei im Verschlusszustand zumindest ein Freigabeelement mindestens eine Öffnung des Abdeckkörpers bedeckt und im Freigabezustand eine äußere Untersuchung des Treibstoffbehälters durch die Öffnung hindurch möglich ist.

Im Freigabezustand kann das Freigabeelement somit geöffnet, insbesondere aufgeklappt oder vom Abdeckkörper abgenommen sein, während das Freigabeelement die Öffnung im Verschlusszustand zumindest derart verschließt, dass durch die Öffnung hindurch grober Schmutz nicht zum Treibstoffbehälter vordringen und dadurch den Treibstoffbehälter beschädigen kann, wenn das Schutzgehäuse am Fahrzeug montiert ist. Der Treibstoffbehälter kann dazu vorgesehen sein, Kraftstoff, wie Erdgas, in flüssiger oder gasförmiger Form bereitzustellen. Vorzugsweise kann es sich daher bei einem Treibstoffbehälter um eine Gasflasche handeln. Insbesondere ist das Fahrzeug daher ein Kraftfahrzeug, insbesondere ein Erdgasfahrzeug.

Unter dem Schutzgehäuse kann somit ein Gehäuse verstanden werden, welches den Treibstoffbehälter zumindest bereichsweise gegenüber Umwelteinflüssen, wie unter dem Fahrzeug aufgewirbeltem Schmutz, schützt. So kann der Abdeckkörper den Treibstoffbehälter zumindest in einem Bereich einer bestimmten Richtung, z.B. gegenüber der Straße, gegen Schmutz abschirmen. Dazu kann der Abdeckkörper des Schutzgehäuses einteilig oder mehrteilig ausgebildet sein. So kann der Abdeckkörper beispielsweise ein ebenes Blech umfassen, hinter welchem der Treibstoffbehälter am Fahrzeug angeordnet ist, und in welchem die Öffnung eingelassen ist. Unter Umwelteinflüssen kann z.B. Spritzwasser, Steinschlag und/oder aufgewirbelter Schmutz oder dergleichen verstanden werden. Ferner kann der Abdeckkörper vorzugsweise als Halbschale ausgebildet sein, welche unterhalb des Unterbodens des Fahrzeugs über den Treibstoffbehälter oder mit dem Treibstoffbehälter montierbar ist.

Die Untersuchung des Treibstoffbehälters kann dabei beispielsweise Teil einer Inspektion oder Hauptuntersuchung sein. Dabei kann unter der äußeren Untersuchung insbesondere eine Untersuchung verstanden, bei welcher der Treibstoffbehälter äußerlich, d.h. die äußere Oberfläche oder ein Teil der äußeren Oberfläche des Treibstoffbehälters, inspiziert wird. Ein Prüfer, der die Untersuchung des Treibstoffbehälters durchführt, verfügt dabei typischerweise über entsprechende Instrumente, um auch durch kleinere Öffnungen dahinterliegende Bauteile zu untersuchen. Entsprechende Instrumente sind beispielsweise Spiegel, Taschenlampen oder eine Kamera. Unter der Öffnung kann somit eine Aussparung verstanden werden, durch welche der Prüfer hindurchblicken und/oder Instrumente hindurchführen kann. Die Öffnung ist im Verschlusszustand durch das Freigabeelement bedeckt. Darunter kann verstanden werden, dass die Öffnung derart von außen oder von innen durch das Freigabeelement verdeckt ist, dass grober Schmutz nicht durch die Öffnung hindurchgelangt. Vorzugsweise kann das Freigabeelement im Verschlusszustand an der Öffnung, insbesondere am Rand der Öffnung, anliegen. Vorzugsweise weist das Freigabeelement und/oder der Abdeckkörper ein Dichtmittel auf, durch welches die Öffnung im Verschlusszustand zwischen Abdeckkörper und Freigabeelement abgedichtet ist. Durch das erfindungsgemäße Schutzgehäuse ergibt sich somit zum einen ein Schutz des Treibstoffbehälters gegenüber Umwelteinflüssen und zum anderen die Möglichkeit den Treibstoffbehälter ohne großen Aufwand zu untersuchen, sodass die Sicherheit des Fahrzeugs gesteigert ist.

Im Rahmen der Erfindung kann ferner vorgesehen sein, dass durch den Abdeckkörper ein Aufnahmeraum zur zumindest teilweisen Aufnahme des Treibstoffbehälters geformt ist. Dabei kann der Aufnahmeraum derart ausgebildet sein, dass mehrere Treibstoffbehälter, insbesondere Gasflaschen, im Aufnahmeraum zumindest teilweise oder vollständig aufnehmbar sind. Somit ist unter der Aufnahme des Treibstoffbehälters vorzugsweise eine räumliche Anordnung des Treibstoffbehälters im Aufnahmeraum zu verstehen. Dadurch kann es ermöglicht sein, das Schutzgehäuse mit dem Treibstoffbehälter am Unterboden des Fahrzeugs einfach zu montieren und somit ein Fahrzeug mit dem Treibstoffbehälter, beispielsweise zum Betrieb des Fahrzeuges mit Erdgas, nachzurüsten. Insbesondere kann der Abdeckkörper halbschalenartig ausgebildet sein. So kann durch den Abdeckkörper eine Mulde geformt sein, welche den Aufnahmeraum bildet. Dadurch kann weiterer Bauraum unterhalb des Fahrzeuges gewonnen werden. Ferner kann bei der Ausbildung des Aufnahmeraums durch den Abdeckkörper vorgesehen sein, dass die Öffnung oder eine weitere Öffnung seitlich am Aufnahmeraum angeordnet ist, so dass der Zugang zur äußeren Untersuchung des Treibstoffbehälters weiter erleichtert ist.

Es ist ferner denkbar, dass bei einem erfindungsgemäßen Schutzgehäuse der Abdeckkörper zumindest ein Haltemittel zur Lagerung des Treibstoffbehälters am Abdeckkörper aufweist. Ein derartiges Haltemittel kann beispielsweise eine Mulde oder ein Befestigungsmittel zur Befestigung des Treibstoffbehälters am Abdeckkörper umfassen. Vorzugsweise kann das Haltemittel einstückig mit dem Abdeckkörper ausgebildet sein. So kann das Haltemittel vorteilhafterweise eine zum Treibstoffbehälter korrespondierende Ausformung des Abdeckkörpers umfassen, in welcher der Treibstoffbehälter anordbar ist. Insbesondere kann das Haltemittel zur formschlüssigen Aufnahme des Treibstoffbehälters ausgebildet sein, so dass eine besonders einfache Montage des Treibstoffbehälters im Abdeckkörper möglich ist. Dabei kann das Haltemittel als Steg zwischen zwei Öffnungen des Abdeckkörpers ausgebildet sein, um Vorteile einer guten Zugänglichkeit und hohen mechanischen Festigkeit zu kombinieren. Vorzugsweise kann vorgesehen sein, dass der Abdeckkörper eine tragfähige Struktur aufweist. So kann der Abdeckkörper beispielsweise eine Verrippung aufweisen und aus einem Material ausgebildet sein, welches eine entsprechend ausreichende Festigkeit aufweist, um den Treibstoffbehälter zu lagern. Insbesondere kann der Abdeckkörper einen integralen Teil einer Fahrzeugkarosserie und/oder einen integralen Teil einer Unterbodenverkleidung des Fahrzeugs bilden. Unter der Lagerung des Treibstoffbehälters kann dabei verstanden werden, dass durch den Abdeckkörper das Gewicht des Treibstoffbehälters teilweise oder vollständig am Fahrzeug gehalten wird. Somit ist es möglich, die Wirkung des Schutzgehäuses zum Schutz des Treibstoffbehälters gegenüber Umwelteinflüssen und die strukturelle Halterung des Treibstoffbehälters am Fahrzeug zu kombinieren. Hierbei ist durch das Freigabeelement dennoch sichergestellt, dass eine Untersuchung des Treibstoffbehälters in einfacher Art und Weise möglich ist. So wäre eine solche Untersuchung beispielsweise im Rahmen einer Hauptuntersuchung quasi unmöglich, wenn das Schutzgehäuse gleichzeitig die tragende Struktur des Treibstoffbehälters bildet und dabei gleichzeitig vollständig demontiert werden müsste, um einen Zugang zum Treibstoffbehälter zu gewährleisten. Durch die erfindungsgemäße Ausbildung sind tragfähige Struktur und Zugang zum Treibstoffbehälter jedoch weiterhin sichergestellt.

Im Rahmen der Erfindung kann ferner vorgesehen sein, dass der Abdeckkörper zumindest eine Befestigungsschnittstelle zur Befestigung des Abdeckkörpers an einem Fahrzeugbauteil aufweist. Ein derartiges Fahrzeugbauteil kann beispielsweise ein Teil einer Karosserie bzw. des Unterbodens des Fahrzeugs sein. Dabei können vorzugsweise mehrere Befestigungsschnittstellen vorgesehen sein, insbesondere um Lasten, die aus dem Gewicht des Treibstoffbehälters resultieren, um das Fahrzeugbauteil zu leiten. Eine derartige Befestigungsschnittstelle kann beispielsweise eine Bohrung am Rand des Abdeckkörpers umfassen. Durch die Befestigungsschnittstelle kann ferner ein modulartiger Aufbau des Schutzgehäuses vorgesehen sein, um dieses beispielsweise zur Nachrüstung eines Fahrzeugs mit Erdgasantrieb in kostengünstiger und einfacher Art und Weise am Fahrzeug montieren zu können. Vorzugsweise sind zwei symmetrisch am Abdeckkörper angeordnete Befestigungsschnittstellen vorgesehen. Dadurch kann eine mechanische Last, welche durch das Gewicht des Treibstoffbehälters und/oder dynamische Lasten während der Fahrt des Fahrzeuges, in effizienter Art und Weise an das Fahrzeugbauteil geleitet werden.

Im Rahmen der Erfindung kann ferner vorgesehen sein, dass das Freigabeelement im Verschlusszustand teilweise oder vollständig lösbar am Abdeckkörper befestigt ist. Somit kann beispielsweise eine Verschraubung vorgesehen sein oder ein Schnellverschluss. Die Verschraubung bietet hier eine sichere Möglichkeit, das Freigabeelement im Verschlusszustand zu fixieren. Gleichzeitig bietet eine Verschraubung die Möglichkeit, z. B. durch spezielle Ausgestaltung von verwendeten Schraubenköpfe einen unbefugten Zugang zum Treibstoffbehälter zu erschweren. So können die Schraubenköpfe der Verschraubung beispielweise eine Sicherheitsgeometrie aufweisen, welche zu einem speziellen, zur Sicherheitsgeometrie korrespondierenden Öffnungswerkzeug passt. Das Öffnungswerkzeug kann entsprechend den Prüfern zur Verfügung stehen, so dass ein unbefugtes Lösen der Verschraubung erschwert ist, den Prüfern ein Zugang zur Öffnung jedoch in einfacher Art und Weise bereitgestellt ist. Die Sicherheitsgeometrie kann im Schraubenkopf beispielsweise eine Ausnehmung in einer definierten Sternform oder dergleichen umfassen. Zusätzlich oder alternativ kann ein Schnellverschluss, insbesondere ein Spannverschluss vorgesehen sein, wobei beispielsweise das Freigabeelement einen Spannbügel aufweisen kann, welcher zur Befestigung des Freigabeelements im Verschlusszustand an einem am Abdeckkörper festmontierten Harken verspannt werden kann. Dadurch kann eine einfache, werkzeuglose Überführung des Freigabeelements vom Verschlusszustand in den Freigabezustand und umgekehrt ermöglicht sein, wobei gleichzeitig ein sicherer Halt des Freigabeelements im Verschlusszustand gewährleistet ist.

Zusätzlich oder alternativ ist bei einem erfindungsgemäßen Schutzgehäuse ferner denkbar, dass das Freigabeelement verschwenkbar am Abdeckkörper angeordnet ist. Dabei kann das Freigabeelement vorzugsweise ein Scharnier aufweisen, welches am Abdeckkörper befestigt ist. Das Scharnier kann beispielsweise eine vordefinierte Reibung aufweisen. Dadurch kann das Scharnier dazu ausgebildet sein, dass das Freigabeelement in einer einmal eingestellten Einstellung verbleibt, sodass keine weiteren Feststellmittel notwendig sein können. Durch eine verschwenkbare Anordnung des Freigabeelements kann zum einen somit sichergestellt sein, dass die Freigabeelemente durch eine Schwenkbewegung vom Verschlusszustand in den Freigabezustand überführt werden können, um einen Blick auf den Treibstoffbehälter freizugeben. Zum anderen wird sichergestellt, dass die Freigabeelemente am Abdeckkörper verbleiben und während der Prüfung nicht verlegt werden können oder nach der Prüfung fehlerhaft am Abdeckkörper montiert werden können.

Im Rahmen der Erfindung ist ferner denkbar, dass der Aufnahmeraum derart ausgebildet ist, dass eine Mittelebene des Treibstoffbehälters vollständig innerhalb des Abdeckkörpers anordbar ist, wobei sich die Öffnung zur Mittelebene, d. h. in Relation zur Mittelebene, beidseitig erstreckt. Unter der beidseitigen Erstreckung der Öffnung kann vorzugsweise verstanden werden, dass sich die Öffnung über die Mittelebene hinaus, d. h. oberhalb und unterhalb der Mittelebene, erstreckt. Ist der Treibstoffbehälter als Gasflasche ausgebildet, weist diese üblicherweise eine zylinderartigen Aufbau und somit einen festen Durchmesser auf. Dabei kann unter der Mittelebene beispielsweise der Äquator der Flasche verstanden werden. Dadurch, dass sich die Öffnung über die Mittelebene hinaus beidseitig erstreckt, ist der Zugang zum Treibstoffbehälter dahingehend sichergestellt, dass bei der Untersuchung, z. B. mit einem Spiegel, der Treibstoffbehälter von mehreren Seiten untersuchbar ist. Dies ist somit insbesondere dann vorteilhaft, wenn die vollständig innerhalb des Aufnahmeraums aufgenommene Mittelebene die, in Bezug zum Untergrund des Fahrzeugs, horizontale Mittelebene ist. Ist der Treibstoffbehälter vollständig im Aufnahmeraum angeordnet, können sich die oben genannten Vorteile auch ergeben, wenn sich die Öffnung in Bezug zur vertikalen Mittelebene beidseitig erstreckt. Auch hier kann ein umfassender Zugang zur Untersuchung des Treibstoffbehälters ermöglicht sein.

Es ist ferner denkbar, dass bei einem erfindungsgemäßen Schutzgehäuse der Aufnahmeraum derart ausgebildet ist, dass der Abdeckkörper in einem Montagezustand des Treibstoffbehälters im Bereich der Öffnung zum Treibstoffbehälter beabstandet ist. Somit kann vorzugsweise vorgesehen sein, dass der Aufnahmeraum ein größeres Volumen umfasst, als der Treibstoffbehälter, sodass zwischen Außenwandung und Treibstoffbehälter im Bereich der Öffnung ein Abstand ausgebildet ist. Dies kann den Zugang bei der Untersuchung des Treibstoffbehälters durch die Öffnung erleichtern, da Instrumente zur Prüfung im Bereich des Abstands zwischen Abdeckkörper und Treibstoffbehälter hindurchgeschoben werden können. Unter dem Montagezustand des Treibstoffbehälters kann entsprechend verstanden werden, dass zumindest der Treibstoffbehälter in das Schutzgehäuse eingesetzt ist oder dass sowohl der Treibstoffbehälter, als auch das Schutzgehäuse am Fahrzeug montiert sind.

Im Rahmen der Erfindung ist ferner denkbar, dass das Abdeckkörper und/oder das Freigabeelement aus einem glasfaserverstärktem Kunststoff ausgebildet ist. Dabei ist die Glasfaserverstärkung vorzugsweise unidirektional hergestellt, um eine erhöhte Festigkeit in Belastungsrichtung zu gewährleisten. Vorzugsweise können der Abdeckkörper und das Freigabeelement materialeinheitlich ausgebildet sein, um eine kostengünstige Fertigung und Handhabung der Teile zu ermöglichen. Der glasfaserverstärkte Kunststoff kann vorzugsweise ein Polypropylen aufweisen. Dies hat sich als zuverlässiger Werkstoff herausgestellt, welcher zum einen die erforderliche Festigkeit aufweist, um eine tragfähige Struktur zum Tragen des Treibstoffbehälters auszubilden und zum anderen eine hohe Korrosionsfestigkeit bietet. Alternativ zum glasfaserverstärkten Kunststoff kann ein Aluminiumguss für das Freigabeelement und/oder den Abdeckkörper vorgesehen sein. Auch Aluminium bietet den Vorteil, sowohl gute mechanische, als auch chemische Eigenschaften aufzuweisen. Darüber hinaus sind derartige Gussbauteile in Serie kostengünstig herstellbar.

Vorzugsweise kann der Abdeckkörper bei einem erfindungsgemäßen Schutzgehäuse ferner umlaufend mehrere Öffnungen aufweisen. So können die Öffnungen jeweils durch ein oder mehrere Freigabeelemente verschließbar sein. Durch mehrere Öffnungen kann die Zugänglichkeit zum Treibstoffbehälter weiter verbessert sein, da eine umlaufende Untersuchung des Treibstoffbehälters ermöglicht sein kann. Im Vergleich zu einer großen Öffnung bieten mehrere Öffnungen ferner den Vorteil, dass weiterhin zwischen den Öffnungen Stege vorgesehen sein können, welche die mechanische Festigkeit des Schutzgehäuses erhöhen. Vorzugsweise können die Stege dabei gleichzeitig die Haltemittel zur Lagerung des Treibstoffbehälters bilden. Gleichzeitig kann eine gute Zugänglichkeit erhalten bleiben.

Der Treibstoffbehälter ist in einem Fahrzeug vorgesehen. Insbesondere ist der Treibstoffbehälter dabei in einem Aufnahmeraum angeordnet. Vorzugsweise kann das Fahrzeug mehrere Treibstoffbehälter aufweisen.

Gemäß einem weiteren Aspekt der Erfindung ist ein Inspektionsverfahren zur Überprüfung zumindest eines Treibstoffbehälters an einem Fahrzeug beansprucht. Der Treibstoffbehälter ist dabei durch ein Schutzgehäuse, insbesondere durch ein erfindungsgemäßes Schutzgehäuse, zumindest teilweise verdeckt. Ferner umfasst das Inspektionsverfahren die folgenden Schritte:
- Überführen eines Abdeckkörpers des Schutzgehäuses von einem Verschlusszustand, in welchem eine Öffnung des Schutzgehäuses von einem Freigabeelement bedeckt ist, in einen Freigabezustand, in welchem eine äußere Untersuchung des Treibstoffbehälters durch die Öffnung hindurch möglich ist.
- Äußeres Untersuchen des Treibstoffbehälters,
- Überführen des Freigabeelements vom Freigabezustand in den Verschlusszustand.

Damit bringt ein erfindungsgemäßes Verfahren die gleichen Vorteile mit sich, wie sie ausführlich mit Bezug auf ein erfindungsgemäßes Schutzgehäuse beschrieben worden sind. Dadurch, dass das Schutzgehäuse den Treibstoffbehälter zumindest teilweise verdeckt, ist der Treibstoffbehälter insbesondere gegenüber Umweltbedingungen geschützt. Vorzugsweise kann zusätzlich zur äußeren Untersuchung des Treibstoffbehälters eine Untersuchung einer Treibstoffbehälterwandung von Innen durchgeführt werden. Die Verfahrensschritte können insbesondere einzeln oder insgesamt wiederholt werden. Vorzugsweise kann das Überführen des Freigabeelements des Schutzgehäuses vom Verschlusszustand in den Freigabezustand ein Lösen eines Befestigungsmittels und das Überführen des Freigabeelements vom Freigabezustand in den Verschlusszustand ein Befestigen des Freigabeelements mittels des Befestigungsmittels umfassen. Vorzugsweise handelt es sich bei dem Fahrzeug, an dem die Überprüfung durchgeführt wird um ein erfindungsgemäßes Fahrzeug.

Weitere, die Erfindung verbessernde Maßnahmen ergeben sich aus der nachfolgenden Beschreibung zu einigen Ausführungsbeispielen der Erfindung, welche in den Figuren schematisch dargestellt sind. Sämtliche aus den Ansprüchen, der Beschreibung oder den Zeichnungen hervorgehenden Merkmalen und/oder Vorteile einschließlich konstruktiver Einzelheiten, räumlicher Anordnungen und Verfahrensschritte, können sowohl für sich, als auch in den verschiedensten Kombinationen erfindungswesentlich sein. Dabei ist zu beachten, dass die Figuren nur beschreibenden Charakter haben und nicht dazu gedacht sind, die Erfindung in irgendeiner Form einzuschränken.

Es zeigen:
- Fig. 1:: ein erfindungsgemäßes Schutzgehäuse mit Freigabeelementen im Freigabezustand in einem ersten Ausführungsbeispiel,
- Fig. 2:: das erfindungsgemäße Schutzgehäuse des ersten Ausführungsbeispiels mit Freigabenelementen in einem Verschlusszustand;
- Fig. 3 A-C:: ein erfindungsgemäßes Schutzgehäuse in einem weiteren Ausführungsbeispiel in schematischer Ansicht;
- Fig. 4:: ein Fahrzeug mit einem erfindungsgemäßen Schutzgehäuse in einem weiteren Ausführungsbeispiel in schematischer Darstellung;
- Fig.5:: eine schematische Darstellung der einzelnen Verfahrensschritte eines erfindungsgemäßen Inspektionsverfahren in einem weiteren Ausführungsbeispiel.

In den nachfolgenden Figuren werden für die gleichen technischen Merkmale auch von unterschiedlichen Ausführungsbeispielen identische Bezugszeichen verwendet.

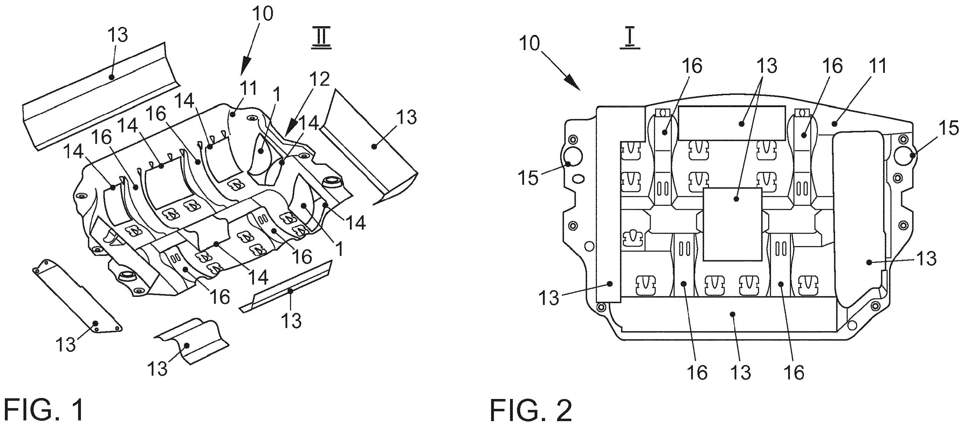

Die Figuren 1 und 2 zeigen ein erfindungsgemäßes Schutzgehäuse 10 in einem ersten Ausführungsbeispiel. Dabei ist das Schutzgehäuse 10 in Fig. 1 in schematischer Perspektivansicht und in Fig. 2 in schematischer Draufsicht dargestellt. Das Schutzgehäuse 10 dient als Schutz für zumindest einen Treibstoffbehälter 1 eines Fahrzeugs 2 gegenüber Umwelteinflüssen, wie aufgewirbeltem Schmutz. Dazu weist das Schutzgehäuse 10 einen Abdeckkörper 11 auf, welcher einen Aufnahmeraum 12 zur zumindest teilweisen Aufnahme des Treibstoffbehälters 1 ausbildet. Im dargestellten ersten Ausführungsbeispiel umfasst der Aufnahmeraum 12 dabei ein ausreichend großes Volumen, so dass zwei Treibstoffbehälter 1 nebeneinander im Aufnahmeraum 12 angeordnet sein können. Ferner sind Freigabeelemente 13 vorgesehen, die in einem Verschlusszustand I, wie in Fig. 2 dargestellt, Öffnungen 14 des Abdeckkörpers 11 nach außen verdecken. Ferner ist der Abdeckkörper 11 vom Verschlusszustand in einen Freigabezustand II überführbar, wie in Fig. 1 dargestellt. Im Freigabezustand II des Abdeckkörpers 11 ist eine äußere Untersuchung der Treibstoffbehälter 1 durch die Öffnungen 14 hindurch möglich. Die Öffnungen 14 sind dabei als Ausnehmungen im Abdeckkörper 11 ausgebildet, sodass ein Hineinsehen und sogar ein Hineingreifen in den Aufnahmeraum 12 möglich ist. Die Treibstoffbehälter 1 sind ferner über Haltemittel 16 am Abdeckkörper 11 gelagert, sodass deren Gewicht durch den Abdeckkörper 11 aufgefangen wird. Die Haltemittel 16 sind dabei einstückig mit dem Abdeckkörper 11 als Stege ausgebildet, welche zwischen zwei Öffnungen 14 verlaufen und mit der Form der Treibstoffbehälter 1 korrespondieren, insbesondere so dass der Treibstoffbehälter 1 formschlüssig aufnehmbar ist. Zur Lagerung des Schutzgehäuses 10 und der Treibstoffbehälter 1 am Fahrzeug 2 sind ferner Befestigungsschnittstellen 15 am Abdeckkörper 11 vorgesehen, um das Schutzgehäuse 10 modulartig am Fahrzeug 2 befestigen zu können. Dazu wird das Schutzgehäuse 10 beispielsweise mit einem Fahrzeugbauteil 3, welches Teil einer Fahrzeugkarosserie sein kann, verschraubt. Dadurch ist eine einfache Nachrüstung des Schutzgehäuses 10 mitsamt Treibstoffbehältern 1 möglich. Vorzugsweise handelt es sich bei den Treibstoffbehältern 1 um Gasflaschen. Durch die umlaufenden Öffnungen 14 im Abdeckkörper 11, welche im Freigabezustand II zugänglich sind, kann eine einfache Untersuchung der Treibstoffbehälter 1 stattfinden. So können beispielsweise Instrumente, wie ein Spiegel, zur Untersuchung durch die Öffnungen hindurchgesteckt werden, um die Treibstoffbehälter 1 möglichst vollständig auf Korrosion oder dergleichen untersuchen zu können. Dadurch wiederum wird die Sicherheit des Fahrzeugs 2 insgesamt gesteigert. Darüber hinaus ist die Struktur des Abdeckkörpers 11 tragfähig ausgebildet, sodass dieser gleichzeitig zur Halterung der Treibstoffbehälter 1 am Fahrzeug 2 dient und somit eine weitere Funktion in sich vereint, sodass die Anzahl der Bauteile des Fahrzeug 2 und damit auch die Komplexität insgesamt reduziert sein kann. Ferner ist in Fig. 1 erkennbar, dass zwischen dem Abdeckkörper 11 und den Treibstoffbehältern 1 im Bereich der Öffnungen 14 ein Abstand vorgesehen ist, um Instrumente zur Untersuchung der Treibstoffbehälter 1 einführen zu können. Vorzugsweise können der Abdeckkörper 11 und die Freigabeelemente 13 einen glasfaserverstärkten Kunststoff, insbesondere aufweisend Polypropylen, umfassen, sodass sowohl eine hohe mechanische Festigkeit gegenüber mechanischen Lasten, als auch eine hohe chemische Festigkeit, beispielsweise gegenüber Korrosion, gegeben ist.

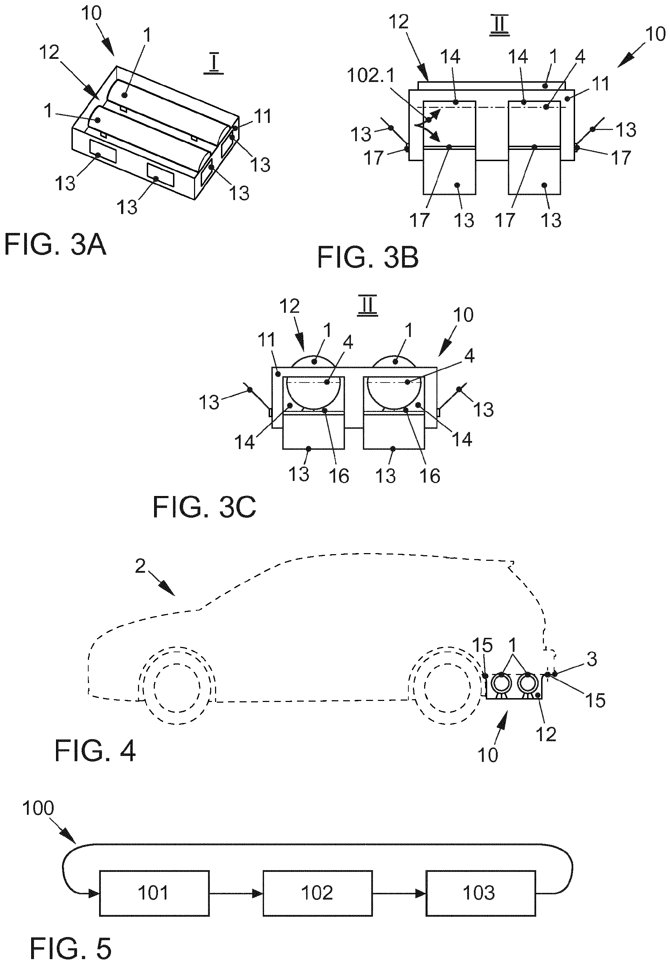

Die Figuren 3A, 3B und 3C zeigen ferner ein erfindungsgemäßes Schutzgehäuse 10 für zwei Treibstoffbehälter 1 in Form von Gasflaschen in einem weiteren Ausführungsbeispiel. So zeigt Fig. 3a das Schutzgehäuse 10 in perspektivischer schematischer Ansicht, wobei die Treibstoffbehälter 1 in einem Aufnahmeraum 12 angeordnet sind, welcher durch einen Abdeckkörper 11 gebildet ist. Der Abdeckkörper 11 weist wiederum Öffnungen 14 auf, welche im in den Figuren 3B und 3C dargestellten Freigabezustand II des Abdeckkörpers 11 einen Zugang von außen durch das Schutzgehäuse 10 zu den Treibstoffbehältern 1 ermöglichen. An den Öffnungen 14 sind Freigabeelemente 13 vorgesehen, welche in der Figuren 3A in einem Verschlusszustand I des Abdeckkörpers 11 dargestellt sind, sodass die Freigabeelemente 13 die Öffnungen 14 verdecken. Im Freigabezustand II ist durch die Öffnungen 14 hindurch eine Untersuchung der Treibstoffbehälter 1 möglich. Über ein Scharnier 17 können die Freigabeelemente 13 ferner durch eine Schwenkbewegung geschlossen werden, sodass in einem Verschlusszustand I die Öffnungen 14 des Abdeckkörpers 11 verschlossen und die Treibstoffbehälter 1 damit gegenüber Umwelteinflüssen geschützt sind. Fig. 3B zeigt das Schutzgehäuse 10 dabei in einer schematischen Seitenansicht. Es ist gezeigt, dass sich die seitlichen Öffnungen 14 über eine Mittelebene 4 der Treibstoffbehälter 1 hinaus insbesondere beidseitig erstrecken. Dabei ist ein Abstand zwischen dem Abdeckkörper 11 und den Treibstoffbehältern 1 jeweils im Bereich der Öffnungen 14 gegeben, sodass entsprechend der dargestellten Pfeile ein Einführen 102.1 von Instrumenten in den Aufnahmeraum 12 durch die Öffnungen 14 möglich ist. Dadurch, dass sich die Öffnungen 14 über die Mittelebene 4 hinaus erstrecken, kann entlang einer Rundung der Treibstoffbehälter 1 die Untersuchung von außen vollständig oder nahezu vollständig durchgeführt werden. Figur 3C zeigt ferner das Schutzgehäuse 10 des zweiten Ausführungsbeispiels in schematischer Frontansicht. Dabei wird deutlich, dass sich auch die Öffnungen 14 in Relation zur vertikalen Mittelebene der Treibstoffbehälter 1 beidseitig erstrecken können, sodass auch dadurch ein möglichst umfassender Zugang zu den Treibstoffbehältern 1 ermöglicht ist.

Figur 4 zeigt ferner ein Fahrzeug 2 mit einem erfindungsgemäßen Schutzgehäuse 10 in schematischer Darstellung. Dabei ist das Schutzgehäuse 10 unterhalb des Kofferraums in Fahrtrichtung hinter der Hinterachse des Fahrzeugs 2 angeordnet und über Befestigungsschnittstellen 15 am Fahrzeug 2 befestigt. Dabei wird die Gewichtslast von hinter dem Schutzgehäuse 10 angeordneten Treibstoffbehältern 1, welche sich im Montagezustand in einem Aufnahmeraum 12 des Schutzgehäuses 10 befinden vom Schutzgehäuse 10 gelagert und über die Befestigungsschnittstellen 15 an das Fahrzeug 2 geleitet. Die Befestigung kann dabei beispielsweise durch eine Verschraubung zwischen einem Fahrzeugbauteil 3, insbesondere einem Karosserieteil des Fahrzeugs 2, und dem Schutzgehäuse 10 vorgesehen sein. Durch das Schutzgehäuse 10 können Verschmutzungen und/oder Steinschläge zumindest größtenteils von den Treibstoffbehältern 1 ferngehalten werden.

Figur 5 zeigt ferner ein erfindungsgemäßes Inspektionsverfahren 100 in schematischer Darstellung der Abfolge der Verfahrensschritte 101 bis 103. Dabei ist das Inspektionsverfahren 100 dazu vorgesehen, zumindest einen Treibstoffbehälter 1 zu überprüfen, welcher durch ein Schutzgehäuse 10, insbesondere einem Schutzgehäuse, gemäß einem der zuvor beschriebenen Ausführungsbeispiele, zumindest teilweise verdeckt ist. Im Rahmen des Inspektionsverfahrens 100 ist dabei zunächst ein Überführen 101 eines Abdeckkörpers 11 des Schutzgehäuses 10 von einem Verschlusszustand I in einen Freigabezustand II vorgesehen. Im Verschlusszustand I verdeckt ein Freigabeelement 13 eine Öffnung 14 des Schutzgehäuses 10 und im Freigabezustand II ist die Öffnung 14 nicht durch das Freigabeelement 13 verdeckt, sodass eine Untersuchung 102 des Treibstoffbehälters 1 durch die Öffnung 14 hindurch möglich ist. Ferner ist im Rahmen des Inspektionsverfahrens 100 ein Untersuchen 102 des Treibstoffbehälters 1 vorgesehen. Dabei kann beispielsweise ein Einführen 102.1 von Instrumenten in einen Aufnahmeraum 12 des Schutzgehäuses 10 vorgesehen sein, um den Treibstoffbehälter 1 von verschiedenen Seiten möglichst genau untersuchen zu können. Hier kann eine optische Untersuchung ausreichend sein, um beispielsweise korrosionsgefährdete Stellen zu entdecken. Nach der Untersuchung des Treibstoffbehälters 1 ist ferner ein Überführen 103 des Abdeckkörpers 11 vom Freigabezustand II in den Verschlusszustand I vorgesehen, um den Schutz des Treibstoffbehälters 1 gegenüber Umwelteinflüssen durch das Schutzgehäuse 10 möglichst vollständig wiederherzustellen. Dabei wird die Öffnung 14 mittels des Freigabeelementes 13 verdeckt.

Die voranstehenden Erläuterungen der Ausführungsform beschreiben die vorliegende Erfindung ausschließlich im Rahmen von Beispielen. Selbstverständlich können einzelne Merkmale der Ausführungsform, sofern technisch sinnvoll, frei miteinander kombiniert werden, ohne den Rahmen der vorliegenden Erfindung zu verlassen.

### Bezugszeichenliste

- 1: Treibstoffbehälter
- 2: Fahrzeug
- 3: Fahrzeugbauteil
- 4: Mittelebene

- 10: Schutzgehäuse
- 11: Abdeckkörper
- 12: Aufnahmeraum
- 13: Freigabeelement
- 14: Öffnung
- 15: Befestigungsschnittstelle
- 16: Haltemittel
- 17: Scharnier

- 100: Inspektionsverfahren
- 101: Verfahrensschritt
- 102: Verfahrensschritt
- 102.1: Einführen von Instrumenten in 12
- 103: Verfahrensschritt

- I: Verschlusszustand
- II: Freigabezustand

## Patentansprüche

1. Schutzgehäuse (10) für zumindest einen Treibstoffbehälter (1) eines Fahrzeuges (2), mit einem Abdeckkörper (11), der dazu ausgebildet ist, den Treibstoffbehälter (1) zumindest teilweise vor Umwelteinflüssen zu schützen,
**dadurch gekennzeichnet,**
**dass** der Abdeckkörper (11) in einen Verschlusszustand (I) und einen Freigabezustand (II) bringbar ist, wobei im Verschlusszustand (I) zumindest ein Freigabeelement (13) mindestens eine Öffnung (14) des Abdeckkörpers (11) bedeckt, und im Freigabezustand (II) eine äußere Untersuchung des Treibstoffbehälters (1) durch die Öffnung (14) hindurch möglich ist.

2. Schutzgehäuse (10) nach Anspruch 1,
**dadurch gekennzeichnet,**
**dass** durch den Abdeckkörper (11) ein Aufnahmeraum (12) zur zumindest teilweisen Aufnahme des Treibstoffbehälters (1) geformt ist.

3. Schutzgehäuse (10) nach Anspruch 1 oder 2,
**dadurch gekennzeichnet,**
**dass** der Abdeckkörper (11) zumindest ein Haltemittel (16) zur Lagerung des Treibstoffbehälters (1) am Abdeckkörper (11) aufweist.

4. Schutzgehäuse (10) nach einem der vorhergehenden Ansprüche,
**dadurch gekennzeichnet,**
**dass** der Abdeckkörper (11) zumindest eine Befestigungsschnittstelle (15) zur Befestigung des Abdeckkörpers (11) an einem Fahrzeugbauteil (3) aufweist.

5. Schutzgehäuse (10) nach einem der vorhergehenden Ansprüche,
**dadurch gekennzeichnet,**
**dass** das Freigabeelement (13) im Verschlusszustand (I) teilweise oder vollständig lösbar am Abdeckkörper (11) befestigt ist.

6. Schutzgehäuse (10) nach einem der vorhergehenden Ansprüche,
**dadurch gekennzeichnet,**
**dass** der Aufnahmeraum (12) derart ausgebildet ist, dass eine Mittelebene (4) des Treibstoffbehälters (1) vollständig innerhalb des Abdeckkörpers (11) anordbar ist, wobei sich die Öffnung (14) zur Mittelebene (4) beidseitig erstreckt.

7. Schutzgehäuse (10) nach einem der vorhergehenden Ansprüche,
**dadurch gekennzeichnet,**
**dass** der Aufnahmeraum (12) derart ausgebildet ist, dass der Abdeckkörper (11) in einem Montagezustand des Treibstoffbehälters (1) im Bereich der Öffnung (14) zum Treibstoffbehälter (1) beabstandet ist.

8. Schutzgehäuse (10) nach einem der vorhergehenden Ansprüche,
**dadurch gekennzeichnet,**
**dass** der Abdeckkörper (11) und/oder das Freigabeelement (13) aus einem glasfaserverstärkten Kunststoff ausgebildet ist.

9. Schutzgehäuse (10) nach einem der vorhergehenden Ansprüche,
**dadurch gekennzeichnet,**
**dass** der Abdeckkörper (11) umlaufend mehrere Öffnungen (14) aufweist.

10. Inspektionsverfahren (100) zur Überprüfung zumindest eines Treibstoffbehälters (1) an einem Fahrzeug (2), wobei der Treibstoffbehälter (1) durch ein Schutzgehäuse (10), insbesondere nach einem der Ansprüche 1 bis 9, zumindest teilweise verdeckt ist, umfassend die folgenden Schritte:
- Überführen (101) eines Abdeckkörpers (11) des Schutzgehäuses (10) von einem Verschlusszustand (I), in welchem eine Öffnung (14) des Schutzgehäuses (10) von einem Freigabeelement (13) bedeckt ist, in einen Freigabezustand (II), in welchem eine äußere Untersuchung des Treibstoffbehälters (1) durch die Öffnung (14) hindurch möglich ist,
- Äußeres Untersuchen (102) des Treibstoffbehälters (1),
- Überführen (103) des Freigabeelementes (13) vom Freigabezustand (II) in den Verschlusszustand (I).
